(19) Europäisches Patentamt
European Patent Office
Office européen des brevets

(11) **EP 4 005 086 B1**

(12) **EUROPÄISCHE PATENTSCHRIFT**

(45) Veröffentlichungstag und Bekanntmachung des Hinweises auf die Patenterteilung:
**20.11.2024   Patentblatt 2024/47**

(21) Anmeldenummer: **20746210.2**

(22) Anmeldetag: **27.07.2020**

(51) Internationale Patentklassifikation (IPC):
*H02P 27/08* (2006.01)    *H02P 21/00* (2016.01)

(52) Gemeinsame Patentklassifikation (CPC):
**H02P 27/085; H02P 21/0089**

(86) Internationale Anmeldenummer:
**PCT/EP2020/071117**

(87) Internationale Veröffentlichungsnummer:
**WO 2021/018829 (04.02.2021 Gazette 2021/05)**

(54) **STEUEREINRICHTUNG, WECHSELRICHTER, ANORDNUNG MIT EINEM WECHSELRICHTER UND EINER ELEKTRISCHEN MASCHINE, VERFAHREN ZUM BETREIBEN EINES WECHSELRICHTERS SOWIE COMPUTERPROGRAMM**

CONTROL DEVICE, INVERTER, ASSEMBLY HAVING AN INVERTER AND AN ELECTRIC MACHINE, METHOD FOR OPERATING AN INVERTER AND COMPUTER PROGRAM

DISPOSITIF DE COMMANDE, ONDULEUR, ENSEMBLE COMPRENANT UN ONDULEUR ET UNE MACHINE ÉLECTRIQUE, PROCÉDÉ DE FONCTIONNEMENT D'UN ONDULEUR ET PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2019   DE 102019120439**

(43) Veröffentlichungstag der Anmeldung:
**01.06.2022   Patentblatt 2022/22**

(73) Patentinhaber: **Valeo eAutomotive Germany GmbH**
**91056 Erlangen (DE)**

(72) Erfinder:
• **MANTZANAS, Panagiotis**
  **91058 Erlangen (DE)**
• **KÜBRICH, Daniel**
  **96132 Schlüsselfeld (DE)**
• **DÜRBAUM, Thomas**
  **91083 Baiersdorf (DE)**

• **BUCHER, Alexander**
  **90480 Nürnberg (DE)**
• **PAWELLEK, Alexander**
  **91058 Erlangen (DE)**
• **HASENOHR, Christian**
  **91056 Erlangen (DE)**
• **HOFMANN, Harald**
  **90471 Nürnberg (DE)**

(74) Vertreter: **Valeo Powertrain Systems**
**Service Propriété Intellectuelle**
**Immeuble le Delta**
**14, avenue des Béguines**
**95892 Cergy Pontoise (FR)**

(56) Entgegenhaltungen:
**EP-A2- 2 940 861      DE-A1- 102017 203 668**
**US-A1- 2010 052 583      US-A1- 2015 280 619**
**US-A1- 2018 076 744**

**Beschreibung**

Die vorliegende Erfindung betrifft eine Steuereinrichtung für einen eine elektrische Maschine speisenden Wechselrichter, wobei die Steuereinrichtung zum Bereitstellen von pulsweitenmodulierten Schaltsignalen mit einer Trägerfrequenz zum Ansteuern von Schaltelementen des Wechselrichters eingerichtet ist.

Daneben betrifft die Erfindung einen Wechselrichter, eine Anordnung mit einem Wechselrichter und einer elektrischen Maschine, ein Verfahren zum Betreiben eines Wechselrichters sowie ein Computerprogramm.

Durch die zunehmende Bedeutung von elektrisch angetriebenen Fahrzeugen sind Wechselrichter und zugehörige Steuereinrichtungen für solche Anwendungsgebiete in den Fokus industrieller Entwicklungsbemühungen gerückt. Es sind derartige Steuereinrichtungen bekannt, die pulsweitenmodulierte Schaltsignale mit einer konstanten Trägerfrequenz zum Ansteuern von Schaltelementen des Wechselrichters bereitstellen. Eine Änderung der Trägerfrequenz ist außerdem aus DE 10 2017 203668 A1 bekannt.

Im Rahmen eines solchen Schaltbetriebs entstehen pulsförmige Ausgangsspannungen, die gerade in bestimmten Bereichen geringer Drehmomente zu einer hohen harmonischen Gesamtverzerrung (THD - Total Harmonic Distortion) der Phasenströme der elektrischen Maschine führen können. Dadurch können jedoch unerwünschter Weise mechanische Vibrationen in der elektrischen Maschine entstehen.

Der Erfindung liegt mithin die Aufgabe zugrunde, harmonische Verzerrungen beim Betrieb eines Wechselrichters zu reduzieren.

Diese Aufgabe wird erfindungsgemäß durch eine Steuereinrichtung nach Anspruch 1, ein Verfahren nach Anspruch 15 sowie ein Computerprogramm nach Anspruch 16 gelöst.

Die Erfindung beruht auf der Erkenntnis, dass eine harmonische Gesamtverzerrung von Ausgangsspannungen des Wechselrichters einerseits von der Trägerfrequenz, bei deren Erhöhung die harmonische Gesamtverzerrung sinkt, und andererseits vom Arbeitspunkt der elektrischen Maschine abhängig ist. Im (ersten) Arbeitsbereich entstehen bei einer angenommenen konstanten Trägerfrequenz je nach Betrag des Drehmoments jedoch nur geringe Schaltverluste, dafür jedoch mit steigender Drehzahl und fallendem Betrag des Drehmoments steigende harmonische Gesamtverzerrungen. Es besteht mithin ein Spielraum für eine Erhöhung der Trägerfrequenz, weil höhere Schaltverluste - verglichen mit einem Betrieb mit konstanter Trägerfrequenz - hingenommen werden können, um die harmonische Gesamtverzerrung zu verringern oder zu begrenzen. Vorteilhafterweise werden so die harmonische Gesamtverzerrung und in der Folge unerwünschte mechanische Vibrationen reduziert.

Die harmonische Gesamtverzerrung der Ausgangsspannungen wird im Sinne dieser Erfindung typischerweise durch ein Verzerrungsmaß beschrieben, das Frequenzkomponenten der Ausgangsspannung des Wechselrichters gewichtet verknüpft. Allgemein lässt sich ein solches Verzerrungsmaß $m_{THD}$ wie folgt formelmäßig erfassen:

$$m_{THD} = \frac{1}{\hat{u}_{N_{AC}}} \sqrt{\sum_{n=1}^{\infty} (\alpha_n \cdot \hat{u}_n)^2}$$

Dabei beschreiben $N_{AC}$ ein Verhältnis einer elektrischen Frequenz der elektrischen Maschine $f_{AC}$ zu einer Fundamentalfrequenz $f_f$ der Ausgangsspannungen $u_x$ des Wechselrichters und $\alpha_n$ Gewichtungsfaktoren. Für die Ausgangsspannungen als Funktion der Zeit t gilt dabei

$$u_x(t) = \sum_{n=1}^{\infty} \hat{u}_n \cdot \cos\left(2\pi n f_f t + \varphi_{x,n}\right)$$

Für den praktisch besonders relevanten Fall von drei Ausgangsphasen des Wechselrichters ist dann $x \in \{RS, ST, TR\}$ in Bezug auf die üblichen Phasenbezeichnungen R, S und T zu setzen.

Als möglicher Spezialfall des Verzerrungsmaßes $m_{THD}$, auf den die Erfindung nicht beschränkt ist, ist dabei die gewichtete harmonische Gesamtverzerrung (WTHD - Weighted Harmonic Distortion) zu sehen, bei der die Frequenzkomponenten ihrer Ordnung nach gewichtet werden. Es gilt dann

$$\alpha_n = \begin{cases} 0 & \text{für } n = N_{AC} \\ \dfrac{N_{AC}}{n} & \text{sonst} \end{cases}$$

und

$$WTHD = \begin{cases} \dfrac{1}{\hat{u}_1} \sqrt{\displaystyle\sum_{n=2}^{\infty} \left(\dfrac{\hat{u}_n}{n}\right)^2} & \text{für } N_{AC} = 1 \\[4ex] \dfrac{1}{\hat{u}_{N_{AC}}} \sqrt{\displaystyle\sum_{n=1}^{N_{AC}-1} \left(\dfrac{N_{AC}}{n} \cdot \hat{u}_n\right)^2 + \sum_{N_{AC}+1}^{\infty} \left(\dfrac{N_{AC}}{n} \cdot \hat{u}_n\right)^2} & \text{für } N_{AC} > 1 \end{cases}$$

Es wird bei der erfindungsgemäßen Steuereinrichtung bevorzugt, wenn die untere Drehzahlgrenze in einem Grunddrehzahlbetrieb liegt.

Mit Vorteil kann bei der erfindungsgemäßen Steuereinrichtung vorgesehen sein, dass sich ein erster Rand des Arbeitsbereichs von einem ersten Arbeitspunkt, dessen Drehzahl der unteren Drehzahlgrenze entspricht, zu einem zweiten Arbeitspunkt erstreckt, dessen Drehzahl größer als die untere Drehzahlgrenze ist und dessen Betrag des Drehmoments größer als der Betrag des Drehmoments des ersten Arbeitspunkts ist. Alternativ oder zusätzlich kann vorgesehen sein, dass sich ein zweiter Rand des Arbeitsbereichs von einem ersten Arbeitspunkt, dessen Drehzahl der oberen Drehzahlgrenze entspricht, zu einem zweiten Arbeitspunkt erstreckt, dessen Drehzahl kleiner als die obere Drehzahlgrenze ist und dessen Betrag des Drehmoments größer als der Betrag des Drehmoments des ersten Arbeitspunkts ist.

Im Folgenden wird eine erste bevorzugte Ausführungsform der Erfindung beschrieben, bei der insbesondere vorgesehen sein kann, dass die Steuereinrichtung dazu eingerichtet ist, die pulsweitenmodulierten Schaltsignale durch kontinuierliche Pulsweitenmodulation, insbesondere Raumzeigermodulation, zu erzeugen.

Bei der ersten bevorzugten Ausführungsform kann vorgesehen sein, dass die zweiten Arbeitspunkte des ersten Rands und des zweiten Rands identisch sind und/oder im Leistungsbegrenzungsbetrieb oder Feldschwächbetrieb liegen und/oder von einem maximalen Betrag des Drehmoments bei der Drehzahl des jeweiligen Arbeitspunkts beabstandet sind.

Ferner kann bei der ersten bevorzugten Ausführungsform vorgesehen sein, dass die Steuereinrichtung dazu eingerichtet ist, die Trägerfrequenz innerhalb eines überschneidungsfrei mit dem ersten Arbeitsbereich definierten zweiten Arbeitsbereichs, der Arbeitspunkte umfasst, deren Betrag des Drehmoments bei einer jeweiligen Drehzahl größer als der größte im ersten Arbeitsbereich liegende Betrag des Drehmoments bei dieser Drehzahl ist, mit steigender Drehzahl, insbesondere unabhängig vom Drehmoment, zu erhöhen. Es wurde festgestellt, dass das Drehmoment im zweiten Arbeitsbereich, in dem sich die Trägerfrequenzwerte zweckmäßigerweise stetig an jene des ersten Arbeitsbereichs anschließen, nur einen sehr geringen oder keinen Einfluss auf die harmonischen Gesamtverzerrungen hat. Insoweit ermöglicht die Definition des zweiten Arbeitsbereichs eine Erweiterung der Reduktion der harmonischen Gesamtverzerrungen auf Arbeitspunkte höherer Last der elektrischen Maschine, insbesondere auf einen Volllastbetrieb. Dabei kann unter einem Volllastbetrieb allgemein im Sinne der Erfindung ein Betrieb verstanden werden, der Arbeitspunkte mit maximalem Betrag des Drehmoments für eine jeweilige Drehzahl umfasst.

Es kann mithin vorgesehen sein, dass sich der zweite Arbeitsbereich vollständig im Leistungsbegrenzungsbetrieb oder Feldschwächbetrieb befindet und/oder bis zum Volllastbetrieb erstreckt.

Im Folgenden wird eine zweite bevorzugte Ausführungsform der Erfindung beschrieben, bei der insbesondere vorgesehen sein kann, dass die Steuereinrichtung dazu eingerichtet ist, die pulsweitenmodulierten Schaltsignale durch diskontinuierliche Pulsweitenmodulation, insbesondere Generalized Discontinous Pulse-width Modulation (GDPWM), zu erzeugen.

Bei der zweiten bevorzugten Ausführungsform ist es von Vorteil, wenn die Steuereinrichtung dazu eingerichtet ist, die Trägerfrequenz innerhalb eines überschneidungsfrei mit dem ersten Arbeitsbereich definierten zweiten Arbeitsbereichs, der Arbeitspunkte umfasst, deren Betrag des Drehmoments bei einer jeweiligen Drehzahl größer als der größte im ersten Arbeitsbereich liegende Betrag des Drehmoments bei dieser Drehzahl ist, mit fallender Drehzahl und fallendem Drehmoment zu erhöhen.

Alternativ oder zusätzlich kann die erfindungsgemäße Steuereinrichtung bei der zweiten bevorzugten Ausführungsform dazu eingerichtet sein, die Trägerfrequenz innerhalb eines überschneidungsfrei mit dem ersten Arbeitsbereich definierten dritten Arbeitsbereichs, der Arbeitspunkte umfasst, deren Betrag des Drehmoments bei einer jeweiligen Drehzahl größer als der größte im ersten Arbeitsbereich liegende Betrag des Drehmoments bei dieser Drehzahl ist, mit steigender Drehzahl und fallendem Drehmoment oder mit steigender Drehzahl unabhängig vom Drehmoment zu erhöhen.

Typischerweise umfasst der dritte Arbeitsbereich Arbeitspunkte, deren Betrag des Drehmoments bei einer jeweiligen Drehzahl größer als der größte im zweiten Arbeitsbereich liegende Betrag des Drehmoments bei dieser Drehzahl ist.

Bei der zweiten bevorzugten Ausführungsform kann bzw. können sich der erste Arbeitsbereich und/oder der zweite Arbeitsbereich und/oder der dritte Arbeitsbereich bis in den Volllastbetrieb erstrecken und/oder vom Grunddrehzahlbetrieb in den Leistungsbegrenzungsbetrieb oder Feldschwächbetrieb erstrecken.

In vorteilhafter Weiterbildung der erfindungsgemäßen Steuereinrichtung kann ferner vorgesehen sein, dass sie dazu eingerichtet ist, die Trägerfrequenz nicht unterhalb eines vorgegebenen oder vorgebbaren Minimalwerts zu ermitteln. Dadurch wird vermieden, dass die Trägerfrequenz für kleine Drehzahl- und Drehmomentwerte so gering wird, dass ihr Verhältnis zur Frequenz eines jeweiligen Phasenstroms der elektrischen Maschine ein vorgegebenes Mindestverhältnis unterschreitet. Arbeitspunkte, an denen der Minimalwert vorgegeben wird, können insoweit auch als ein weiterer Arbeitsbereich aufgefasst werden.

Um eine besonders aufwandsarme Implementierung der erfindungsgemäßen Steuereinrichtung zu ermöglichen, ist diese bevorzugt dazu eingerichtet, die Trägerfrequenz aus einem Kennfeld, das Paaren von Drehzahlwerten und Drehmomentwerten Trägerfrequenzwerte zuordnet, auszuwählen. Das Kennfeld kann beispielsweise durch eine Look-Up-Tabelle realisiert sein. Typischerweise weist die Steuereinrichtung eine Speichereinheit auf, in welcher das Kennfeld gespeichert ist.

Es kann ferner vorgesehen sein, dass das Kennfeld eine zumindest stückweise lineare Zuordnung der Paare und der Trägerfrequenzwerte beschreibt. Alternativ ist es möglich, dass das Kennfeld über diskrete Paare definiert ist und die Steuereinrichtung dazu eingerichtet ist, die Trägerfrequenz durch, insbesondere lineare, Interpolation der den diskreten Paaren zugeordneten Trägerfrequenzwerten zu ermitteln.

Alternativ zur Verwendung eines Kennfeldes kann die erfindungsgemäße Steuereinrichtung dazu eingerichtet sein, die Trägerfrequenz mittels einer analytischen Berechnungsvorschrift, aus welcher die Trägerfrequenz in Abhängigkeit des Arbeitspunkts ermittelbar ist, zu ermitteln.

Das Kennfeld oder die Berechnungsvorschrift kann beispielsweise durch Messung oder Simulation für eine bestimmte Konfiguration des Wechselrichters und der elektrischen Maschine ermittelt worden sein.

Die erfindungsgemäße Steuereinrichtung kann ferner dazu eingerichtet sein, eine aktualisierte Trägerfrequenz jeweils bei Erhalt einer aktualisierten Arbeitspunktinformation und/oder nach Ablauf einer vorgegebenen oder vorgebbaren Zeitspanne und/oder nach Abschluss einer elektrischen Periode der elektrischen Maschine und/oder nach Abschluss einer Periode eines jeweiligen Schaltsignals zu ermitteln. So kann die Trägerfrequenz zu zweckmäßigen Zeitpunkten jeweils an den momentanen Arbeitspunkt angepasst werden.

Es ist ferner möglich, dass die erfindungsgemäße Steuereinrichtung dazu eingerichtet ist, die Arbeitspunktinformation aus einer an einem Eingang erhaltenen Drehmomentinformation und/oder einer an einem Eingang erhaltenen Drehzahlinformation und/oder in Abhängigkeit einer an einem Eingang erhaltenen, die elektrische Maschine speisende Phasenströme beschreibenden Strominformation zu ermitteln und/oder die Arbeitspunktinformation im Rahmen einer Regelung zur Ermittlung der Schaltsignale zu schätzen. Aus der Strominformation ist insbesondere das Drehmoment ermittelbar.

Die der Erfindung zugrunde liegende Aufgabe wird ferner gelöst durch einen Wechselrichter, umfassend Schaltelemente, die dazu verschaltet sind, eine eingangsseitig anliegende Spannung in Abhängigkeit von die Schaltelemente ansteuernden Schaltsignalen in einen Wechselstrom zum Betreiben einer elektrischen Maschine umzurichten, und eine erfindungsgemäße Steuereinrichtung.

Der Wechselrichter kann ferner einen Zwischenkreiskondensator aufweisen, welcher insbesondere durch ein einziges Kondensatorelement oder durch mehrere parallel und/oder in Reihe verschaltete Kondensatorelemente ausgebildet ist.

Der Wechselrichter kann ferner einen Analog-Digital-Umsetzer umfassen, welcher dazu eingerichtet ist, analoge Messsignale in die Strominformation und/oder die Drehmomentinformation und/oder die Drehzahlinformation umzusetzen.

Die der Erfindung zugrunde liegende Aufgabe wird ferner gelöst durch eine Anordnung mit einem erfindungsgemäßen Wechselrichter und einer elektrischen Maschine, die mittels des Wechselrichters betreibbar ist.

Dabei wird es bevorzugt, wenn die Ermittlung der Trägerfrequenz folgenden Zusammenhang abbildet:

$$f_{PWM}(M, f_{rot}) = \begin{cases} f_{PWM,m_{THD}}(M, f_{rot}) & \text{für } m_{THD}|_{f_{PWM,min}} > \max\left(m_{THD}|_{f_{PWM,losses}}\right) \\ f_{PWM,min} & \text{für } m_{THD}|_{f_{PWM,min}} \leq \max\left(m_{THD}|_{f_{PWM,losses}}\right) \end{cases}$$

mit

$$f_{PWM,m_{THD}}(M, f_{rot}) = g(m_{THD}|_{f_{PWM,min}}, \max(m_{THD}|_{f_{PWM,losses}}), f_{PWM,min})$$

und

$$f_{PWM,losses}(M, f_{rot}) = \frac{\max(P_{tot}|_{f_{PWM,min}}) - P_c}{P_S|_{f_{PWM,min}}} \cdot f_{PWM,min}$$

wobei

- $f_{PWM}(M, f_{rot})$ die zu ermittelnde, vom Drehmoment M und der Drehzahl $f_{rot}$ abhängige Trägerfrequenz,
- $m_{THD}$ ein Verzerrungsmaß für harmonische Gesamtverzerrungen von Ausgangsspannungen des Wechselrichters,
- $f_{PWM,min}$ eine vorgegebene oder vorgebbare Mindestträgerfrequenz,
- $f_{PWM,losses}(M, f_{rot})$ eine vom Drehmoment M und der Drehzahl $f_{rot}$ abhängige Trägerfrequenz unter Berücksichtigung von dem Maximum der Gesamtverluste des Wechselrichters bei der Mindestträgerfrequenz max($P_{tot}|_{fPWM,min}$), Schaltverlusten bei der Mindestträgerfrequenz $P_S|_{fPWM,min}$ und Leitverlusten $P_c$,
- $f_{PWM,mTHD}(M, f_{rot})$ eine vom Drehmoment M und der Drehzahl $f_{rot}$ abhängige Trägerfrequenz unter Berücksichtigung des Verzerrungsmaßes bei der Mindestträgerfrequenz $m_{THD}|_{fPWM,min}$ und des Maximums des Verzerrungsmaßes bei der von den Verlusten abhängigen Trägerfrequenz max ($m_{THD}|_{fPWM,losses}$) und
- $g(m_{THD}|_{fPWM,min}, \max(m_{THD}|_{fPWM,losses}), f_{PWM,min})$ eine, insbesondere simulations- oder messtechnisch ermittelte, Funktion von $m_{THD}|_{fPWM,min}$, max($m_{THD}|_{fPWM,losses}$) und $f_{PWM,min}$

beschreiben.

Wenn als Verzerrungsmaß die WTHD verwendet wird, kann gelten:

$$f_{PWM,m_{THD}}(M, f_{rot}) = \frac{m_{THD}|_{f_{PWM,min}}}{\max(m_{THD}|_{f_{PWM,losses}})} \cdot f_{PWM,min}$$

Die der Erfindung zugrunde liegende Aufgabe wird ferner gelöst durch ein Verfahren zum Betreiben eines Wechselrichters zum Versorgen einer elektrischen Maschine, umfassend folgende von einer Steuereinrichtung durchgeführte Schritte: Ermitteln einer Trägerfrequenz von pulsweitenmodulierten Schaltsignalen zum Ansteuern des Wechselrichters in Abhängigkeit einer Arbeitspunktinformation, die einen durch eine Drehzahl und ein Drehmoment der elektrischen Maschine definierten Arbeitspunkt beschreibt, derart, dass die Trägerfrequenz innerhalb eines Arbeitsbereichs, der sich innerhalb eines Drehzahlintervalls mit einer von null verschiedenen unteren Drehzahlgrenze und mit einer in einem Leistungsbegrenzungsbetrieb oder Feldschwächbetrieb liegenden oberen Drehzahlgrenze erstreckt, mit steigender Drehzahl und fallendem Betrag des Drehmoment erhöht wird; und Bereitstellen der Schaltsignale für Schaltelemente des Wechselrichters.

Die der Erfindung zugrunde liegende Aufgabe wird schließlich gelöst durch ein Computerprogramm, umfassend Befehle, die bei der Ausführung des Programms durch einen Computer diesen veranlassen, die von der Steuereinrichtung durchgeführten Schritte des erfindungsgemäßen Verfahrens auszuführen.

Sämtliche Ausführungen zur erfindungsgemäßen Steuereinrichtung, zum erfindungsgemäßen Wechselrichter und zur erfindungsgemäßen Anordnung lassen sich analog auf das erfindungsgemäße Verfahren und das erfindungsgemäße Computerprogramm übertragen, sodass die vorgenannten Vorteile auch mit diesen erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:

Fig. 1 ein Blockschaltbild eines Ausführungsbeispiels einer erfindungsgemäßen Anordnung mit einem Ausführungsbeispiel eines erfindungsgemäßen Wechselrichters und einem Ausführungsbeispiel einer erfindungsgemäßen Steuereinrichtung;

Fig. 2 ein Drehmoment-Drehzahl-Diagramm mit eingezeichneten Arbeitsbereichen beim Betrieb der in Fig. 1 gezeigten Anordnung;

Fig. 3 ein Drehmoment-Drehzahl-Diagramm mit eingezeichneter WTHD bei einer Anordnung nach dem Stand der Technik;

Fig. 4    ein Drehmoment-Drehzahl-Diagramm mit eingezeichneten Gesamtverlusten des Wechselrichters bei der Anordnung nach dem Stand der Technik;

Fig. 5    ein Drehmoment-Drehzahl-Diagramm mit eingezeichneten Trägerfrequenzwerten beim Betrieb eines weiteren Ausführungsbeispiels der erfindungsgemäßen Anordnung;

Fig. 6    ein Drehmoment-Drehzahl-Diagramm mit eingezeichneter WTHD des weiteren Ausführungsbeispiels;

Fig. 7    ein Drehmoment-Drehzahl-Diagramm mit eingezeichneten Gesamtverlusten des Wechselrichters des weiteren Ausführungsbeispiels;

Fig. 8    ein Drehmoment-Drehzahl-Diagramm mit eingezeichneten Arbeitsbereichen beim Betrieb eines weiteren Ausführungsbeispiels der in Fig. 1 gezeigten Anordnung;

Fig. 9    ein Drehmoment-Drehzahl-Diagramm mit eingezeichneter WTHD bei einer weiteren Anordnung nach dem Stand der Technik;

Fig. 10    ein Drehmoment-Drehzahl-Diagramm mit eingezeichneten Gesamtverlusten des Wechselrichters bei der weiteren Anordnung nach dem Stand der Technik;

Fig. 11    ein Drehmoment-Drehzahl-Diagramm mit eingezeichneten Trägerfrequenzwerten beim Betrieb eines weiteren Ausführungsbeispiels der erfindungsgemäßen Anordnung;

Fig. 12    ein Drehmoment-Drehzahl-Diagramm mit eingezeichneter WTHD des weiteren Ausführungsbeispiels; und

Fig. 13    ein Drehmoment-Drehzahl-Diagramm mit eingezeichneten Gesamtverlusten des Wechselrichters des weiteren Ausführungsbeispiels.

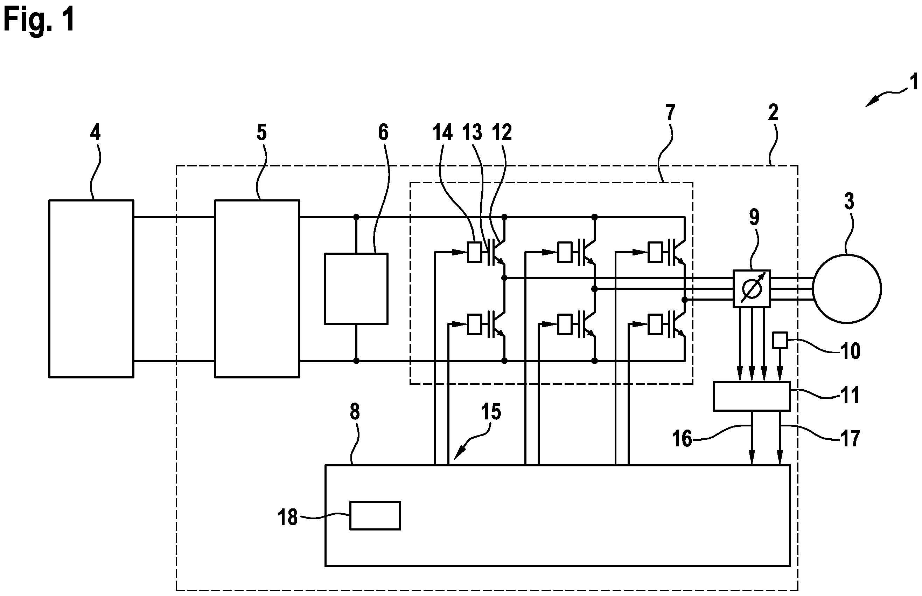

Fig. 1 ist ein Blockschaltbild eines Ausführungsbeispiels einer Anordnung 1, umfassend ein Ausführungsbeispiel eines Wechselrichters 2 und eine elektrische Maschine 3, die zum Antrieb eines teilweise oder vollständig elektrisch antreibbaren Fahrzeugs eingerichtet ist. Die Anordnung 1 umfasst ferner eine Gleichspannungsquelle 4, die vorliegend als Hochvoltbatterie ausgebildet ist.

Der Wechselrichter 2 umfasst eine Filtereinrichtung 5, die vorliegend als EMV-Filter ausgebildet ist, einen Zwischenkreiskondensator 6, eine Leistungseinheit 7, ein Ausführungsbeispiel einer Steuereinrichtung 8, eine erste Messeinrichtung 9, eine zweite Messeinrichtung 10 sowie eine Analog-Digital-Umsetzereinrichtung 11.

Die Leistungseinheit 7 umfasst mehrere Schaltelemente 12, die als Halbleiter-Schaltelemente, beispielsweise als IGBT oder Leistungs-MOSFET, ausgebildet sind. Die Schaltelemente 12 sind paarweise zu Halbbrücken verschaltet. Einem Steuereingang 13 eines jeweiligen Schaltelements 12 ist ein Treiber 14 vorgeschaltet. Dabei sind aus Gründen der Übersichtlichkeit lediglich ein Schaltelement 12 und ein Treiber 14 mit Bezugszeichen versehen. Die Treiber 14 erhalten pulsweitenmodulierte Schaltsignale 15 von der Steuereinrichtung 8, welche derart bereitgestellt werden, dass an einem jeweiligen Abgriff der Halbbrücken eine Spannung zur Speisung der elektrischen Maschine 3 bereitgestellt wird. Die Leistungseinheit 7 richtet mithin in Abhängigkeit der Schaltsignale 15 eine durch den Zwischenkreiskondensator 6 geglättete Zwischenkreisspannung in einen, vorliegend dreiphasigen, Spannung um.

Die erste Messeinrichtung 9 ist dazu eingerichtet, die Phasenströme zu erfassen und Messsignale der Analog-Digital-Umsetzereinrichtung 11 bereitzustellen, welche die analogen Messsignale der ersten Messeinrichtung 9 in eine digitale Strominformation 16 umsetzt. Die zweite Messeinrichtung 10 ist entsprechend dazu eingerichtet, eine Drehzahl der elektrischen Maschine 3 zu erfassen und Messsignale der Analog-Digital-Umsetzereinrichtung 11 bereitzustellen, welche die analogen Messsignale der zweiten Messeinrichtung 10 in eine digitale Drehzahlinformation 17 umsetzt. Die Steuereinrichtung 8 erhält eingangsseitig die Strominformation 16 und die Drehzahlinformation 17.

Anhand der Strominformation 16 und der Drehzahlinformation 17 ermittelt die Steuereinrichtung 8 eine Arbeitspunktinformation, die einen durch eine Drehzahl und ein Drehmoment der elektrischen Maschine 3 definierten Arbeitspunkt beschreibt. Die Steuereinrichtung 8 ist dazu eingerichtet, eine Trägerfrequenz der pulsweitenmodulierten Schaltsignale 15 zu ermitteln. Dazu umfasst die Steuereinrichtung 8 eine Speichereinheit 18, in welcher ein Kennfeld, das Paaren von Drehzahlwerten und Drehmomentwerten Trägerfrequenzwerte zuordnet, gespeichert ist. Die Steuereinrichtung 8 wählt einen entsprechenden Trägerfrequenzwert anhand der Arbeitspunktinformation aus dem Kennfeld aus.

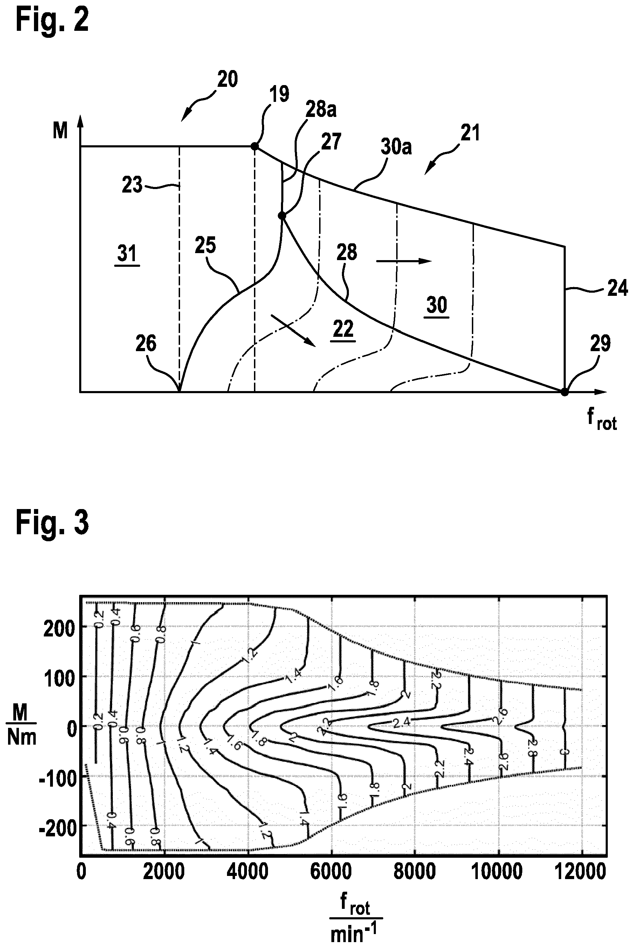

Fig. 2 ist ein Drehmoment-Drehzahl-Diagramm mit eingezeichneten Arbeitsbereichen beim Betrieb der in Fig. 1 gezeigten Anordnung, wobei ein Drehmoment mit M und eine Drehzahl mit $f_{rot}$ bezeichnet sind. Im vorliegenden Ausführungsbeispiel werden die Schaltsignale 15 durch kontinuierliche Raumzeigermodulation (SVM - Space Vector Modulation) ermittelt.

Das Diagramm bildet das Kennfeld ab, welches eine Zuordnung der Paare und der Trägerfrequenzwerte beschreibt. In Fig. 2 ist zunächst ein Eckarbeitspunkt 19 gezeigt, der ein betragsmäßig maximales Drehmoment beim Übergang von einem Grunddrehzahlbetrieb 20 in einen Leistungsbegrenzungsbetrieb 21 oder in einen Feldschwächbetrieb beschreibt. Ausgewählte Isolinien der Trägerfrequenzwerte sind durch strichpunktierte Linien dargestellt.

Ein erster Arbeitsbereich 22 erstreckt sich innerhalb eines Drehzahlintervalls mit einer von null verschiedenen unteren Drehzahlgrenze 23 und mit einer in einem Leistungsbegrenzungsbetrieb 21 oder Feldschwächbetrieb liegenden oberen Drehzahlgrenze 24. Ein erster Rand 25 des ersten Arbeitsbereichs 22 erstreckt sich von einem im Grunddrehzahlbetrieb liegenden ersten Arbeitspunkt 26, dessen Drehzahl der unteren Drehzahlgrenze 23 entspricht, zu einem zweiten Arbeitspunkt 27, dessen Drehzahl größer als die untere Drehzahlgrenze 23 ist und dessen Betrag des Drehmoments größer als der Betrag des Drehmoments des ersten Arbeitspunkts 26 ist. Der zweite Arbeitspunkt 27 liegt im Leistungsbegrenzungsbetrieb 21 oder Feldschwächbetrieb und ist von einem maximalen Betrag des Drehmoments bei der Drehzahl des zweiten Arbeitspunkts 27 beabstandet.

Ein zweiter Rand 28 des ersten Arbeitsbereichs 22 erstreckt sich von einem ersten Arbeitspunkt 29, dessen Drehzahl der oberen Drehzahlgrenze entspricht, zu einem zweiten Arbeitspunkt, der identisch mit dem zweiten Arbeitspunkt 27 des ersten Rands 25 ist.

Die Steuereinrichtung 8 ist dazu eingerichtet, die Trägerfrequenz innerhalb des ersten Arbeitsbereichs 22 mit steigender Drehzahl und fallendem Betrag des Drehmoments zu erhöhen. Dies wird hier und im Folgenden durch einen Pfeil symbolisiert.

Ein zweiter Arbeitsbereich 30, der überschneidungsfrei mit dem ersten Arbeitsbereich 22 definiert ist, umfasst Arbeitspunkte, deren Betrag des Drehmoments bei einer jeweiligen Drehzahl größer als der größte im ersten Arbeitsbereich liegende Betrag des Drehmoments bei dieser Drehzahl ist. Der zweite Arbeitsbereich 30 befindet sich vollständig im Leistungsbegrenzungsbetrieb 21 oder Feldschwächbetrieb und erstreckt sich bis zu einem Volllastbetrieb 30a, der durch eine Linie im Kennfeld, bei der für eine jeweilige Drehzahl das betragsmäßig maximal mögliche Drehmoment vorliegt, beschrieben ist. Die Steuereinrichtung 8 ist dazu eingerichtet, die Trägerfrequenz innerhalb des zweiten Arbeitsbereichs 30 mit steigender Drehzahl unabhängig vom Drehmoment zu erhöhen.

Schließlich ist die Steuereinrichtung 8 dazu eingerichtet, die Trägerfrequenz nicht unterhalb eines vorgegebenen Minimalwerts zu ermitteln. Insofern ist ein weiterer Arbeitsbereich 31 eingezeichnet, in welchem der Minimalwert vorgegeben wird. Der weitere Arbeitsbereich 31 umfasst Arbeitspunkte auf der Seite geringerer Drehzahl des ersten Rands 25 und eines Rands 28a des zweiten Arbeitsbereichs 30.

Zusammengefasst bildet das Kennfeld für die Arbeitsbereiche 22, 30, 31 folgenden Zusammenhang ab:

$$
f_{PWM}(M, f_{rot}) = \begin{cases} f_{PWM,WTHD}(M, f_{rot}) & \text{für } WTHD|_{f_{PWM,min}} > \max\left(WTHD|_{f_{PWM,losses}}\right) \\ f_{PWM,min} & \text{für } WTHD|_{f_{PWM,min}} \leq \max\left(WTHD|_{f_{PWM,losses}}\right) \end{cases}
$$

mit

$$
f_{PWM,WTHD}(M, f_{rot}) = \frac{WTHD|_{f_{PWM,min}}}{\max\left(WTHD|_{f_{PWM,losses}}\right)} \cdot f_{PWM,min}
$$

und

$$
f_{PWM,losses}(M, f_{rot}) = \frac{\max\left(P_{tot}|_{f_{PWM,min}}\right) - P_c}{P_S|_{f_{PWM,min}}} \cdot f_{PWM,min}
$$

wobei

- $f_{PWM}(M, f_{rot})$ die zu ermittelnde, vom Drehmoment M und der Drehzahl $f_{rot}$ abhängige Trägerfrequenz,
- *WTHD* eine gewichtete Gesamtverzerrung (Weighted Total Harmonic Distortion) als exemplarisches Verzerrungsmaß für harmonische Gesamtverzerrungen von Ausgangsspannungen des Wechselrichters 2,
- $f_{PWM,min}$ die Mindestträgerfrequenz,
- $f_{PWM,losses}(M, f_{rot})$ eine vom Drehmoment M und der Drehzahl $f_{rot}$ abhängige Trägerfrequenz unter Berücksichtigung von dem Maximum der Gesamtverluste bei der Mindestträgerfrequenz $\max(P_{tot}|_{fPWM,min})$, Schaltverlusten bei der Mindestträgerfrequenz $P_S|_{fPWM,min}$ und Leitverlusten $P_c$, und

- $f_{PWM,WTHD}(M, f_{rot})$ eine vom Drehmoment M und der Drehzahl $f_{rot}$ abhängige Trägerfrequenz unter Berücksichtigung der gewichteten Gesamtverzerrung bei der Mindestträgerfrequenz $WTHD|_{fPWM,min}$ und des Maximums der gewichteten Gesamtverzerrung bei der von den Verlusten abhängigen Trägerfrequenz max $(WTHD|_{fPWM,losses})$

beschreiben.

Die Steuereinrichtung 8 ist dazu eingerichtet, die Trägerfrequenz regelmäßig zu aktualisieren. Dies erfolgt beispielsweise bei Erhalt einer aktualisierten Arbeitspunktinformation, nach Ablauf einer vorgegebenen oder vorgebbaren Zeitspanne, nach Abschluss einer elektrischen Periode der elektrischen Maschine 3 oder nach Abschluss einer Periode eines jeweiligen Schaltsignals 15. Es sind auch Kombinationen der zuvor genannten Aktualisierungsereignisse möglich.

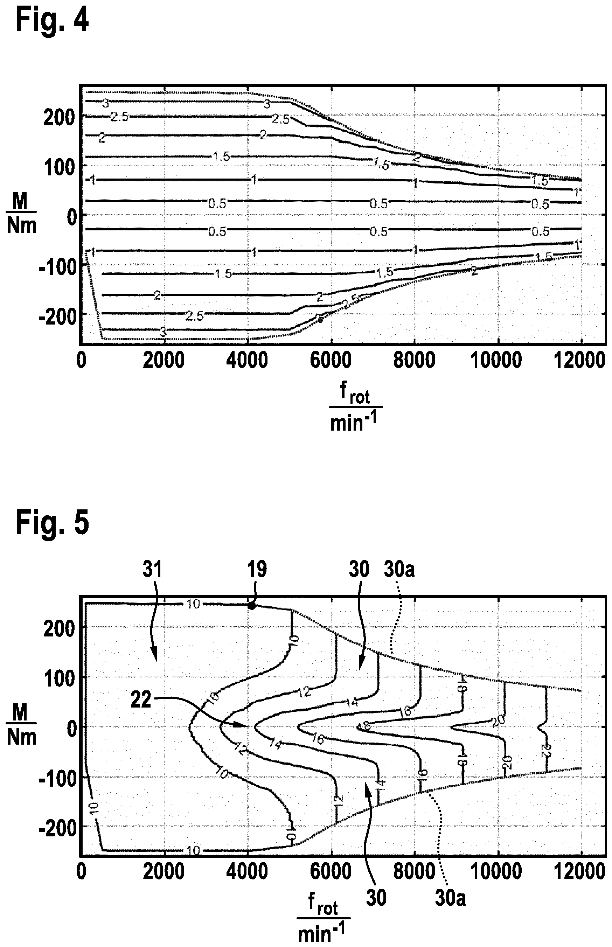

Fig. 3 und Fig. 4 beziehen sich auf eine Fig. 1 entsprechende Anordnung nach dem Stand der Technik, bei der SVM verwendet wird. Bei dieser Anordnung ist jedoch vorgesehen, dass die Trägerfrequenz für alle Arbeitspunkte des Drehmoment-Drehzahl-Diagramms konstant mit 10 kHz vorgegeben wird.

Fig. 3 ist ein Drehmoment-Drehzahl-Diagramm mit eingezeichneter WTHD bei der Anordnung nach dem Stand der Technik. Die WTHD ist in Fig. 3 durch Isolinien dargestellt, auf denen ein Wert der WTHD in Prozent angegeben ist. Ersichtlich steigt die WTDH grundsätzlich mit steigender Drehzahl und ist bei betragsmäßig geringen Drehmomenten besonders stark ausgeprägt. Ein hoher Wert der WTHD kann dabei unerwünschte Vibrationen in der elektrischen Maschine 3 verursachen.

Fig. 4 ist ein Drehmoment-Drehzahl-Diagramm mit eingezeichneten Gesamtverlusten des Wechselrichters der Anordnung nach dem Stand der Technik. Die Gesamtverluste sind in Fig. 4 durch Isolinien dargestellt, auf denen ein Wert der Gesamtverluste in kW angegeben ist. In grober Näherung steigen die Gesamtverluste bei der konstanten Trägerfrequenz von 10 kHz mit betragsmäßig steigendem Drehmoment und sind nahezu unabhängig von der Drehzahl.

Fig. 5, Fig. 6 und Fig. 7 beziehen sich auf ein weiteres Ausführungsbeispiel der Anordnung 1, das dem zuvor beschriebenen Ausführungsbeispiel gemäß Fig. 1 und Fig. 2 entspricht. Dabei ist eine konkrete Ausgestaltung der Anordnung 1 mit einem Kennfeld gezeigt, das sich bis zu einer Drehzahl von 12.000 min$^{-1}$ erstreckt und Drehmomente zwischen ca. -250 und 250 Nm umfasst. Die Bestimmung der Trägerfrequenz ist arbeitspunktabhängig. Die Schaltsignale 15 werden mittels SVM ermittelt.

Fig. 5 ist ein Drehmoment-Drehzahl-Diagramm mit eingezeichneten Trägerfrequenzwerten beim Betrieb des weiteren Ausführungsbeispiels. Das Kennfeld wurde hier experimentell oder durch Simulation ermittelt. Gekennzeichnet sind die Arbeitsbereiche 22, 30, 31 und der Eckarbeitspunkt 19.

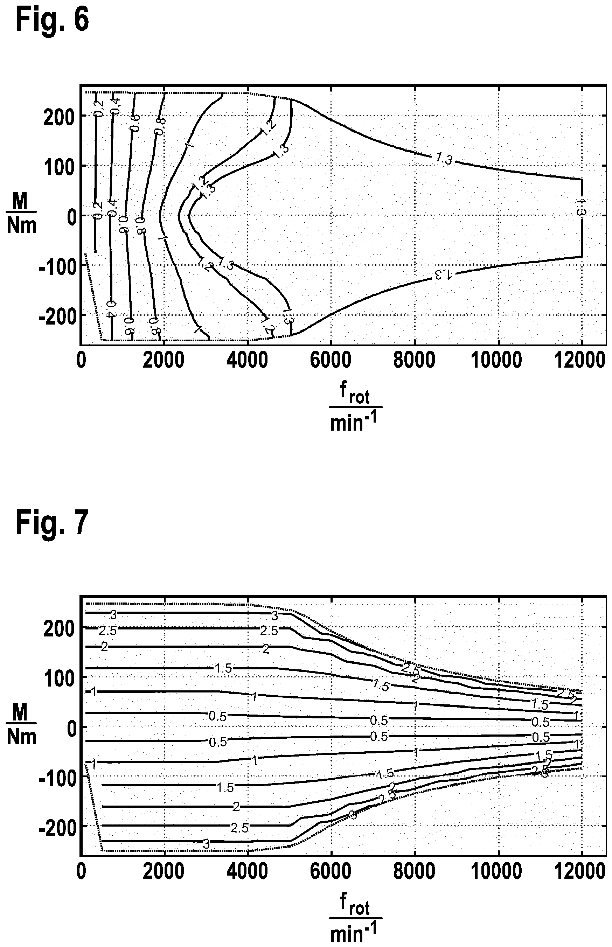

Fig. 6 ist ein Drehmoment-Drehzahl-Diagramm mit eingezeichneter WTHD, wobei die Darstellung Fig. 3 entspricht. Dem Vergleich von Fig. 6 mit Fig. 3 ist zu entnehmen, dass durch die arbeitspunktabhängige Bestimmung der Trägerfrequenz ein maximaler WTHD-Wert von 1,3 % realisiert wird, der wesentlich geringer als ein maximaler WTHD-Wert von über 3,0 % bei der konstanten Trägerfrequenzvorgabe nach dem Stand der Technik ist.

Fig. 7 ist ein Drehmoment-Drehzahl-Diagramm mit eingezeichneten Gesamtverlusten des Wechselrichters 2, wobei die Darstellung Fig. 4 entspricht. Dem Vergleich von Fig. 7 mit Fig. 4 ist zu entnehmen, dass die Gesamtverluste in den Bereichen, in denen bei konstanter Trägerfrequenzvorgabe hohe WTHD-Werte auftreten, gegenüber dem Stand der Technik leicht erhöht sind. Von besonderer Beachtung sind jedoch die maximalen Gesamtverluste, weil insbesondere die thermische Beständigkeit der Schaltelemente 12 daran ausgerichtet werden muss. Diese sind vorteilhafterweise praktisch unverändert. Die arbeitspunktabhängige Trägerfrequenzvorgabe ermöglicht so eine signifikante Reduktion der harmonischen Gesamtverzerrung über weite Arbeitsbereiche der elektrischen Maschine 3, ohne dabei die maximalen Gesamtverluste zu erhöhen.

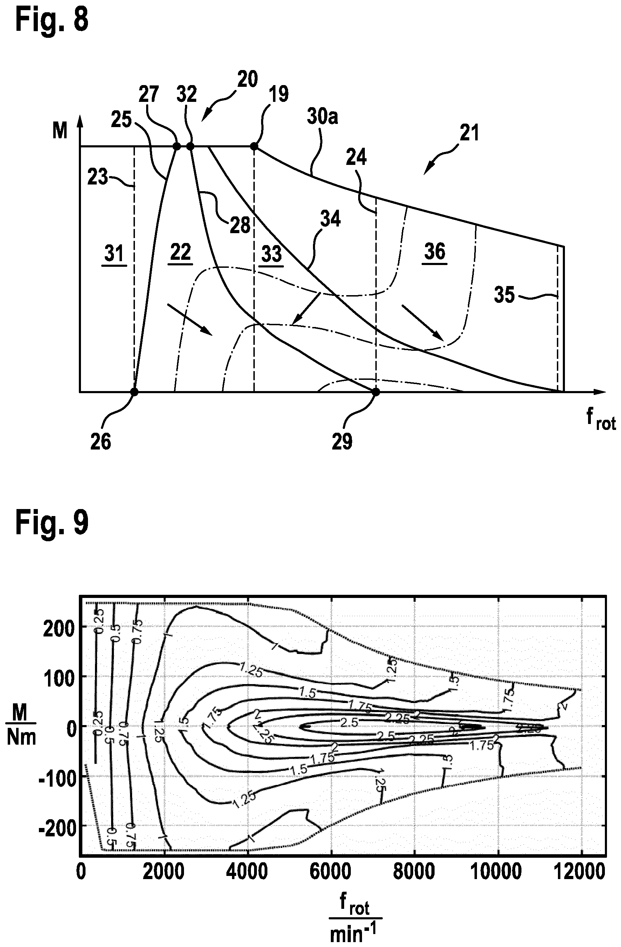

Fig. 8 ist ein Drehmoment-Drehzahl-Diagramm mit eingezeichneten Arbeitsbereichen beim Betrieb eines weiteren Ausführungsbeispiels der in Fig. 1 gezeigten Anordnung 1. Im vorliegenden Ausführungsbeispiel werden die Schaltsignale 15 durch Generalized Discontinous Pulsewidth Modulation (GDPWM), also einem diskontinuierlichen Modulationsverfahren, ermittelt.

In Fig. 8 ist wiederum der erste Arbeitsbereich 22 gezeigt, innerhalb dessen die Trägerfrequenz mit steigender Drehzahl und fallendem Betrag des Drehmoments erhöht wird und der sich zwischen der unteren Drehzahlgrenze 23 und der in einem Leistungsbegrenzungsbetrieb 21 oder Feldschwächbetrieb liegenden oberen Drehzahlgrenze 24 erstreckt. Der erste Rand 25 des ersten Arbeitsbereichs 22 erstreckt sich vom im Grunddrehzahlbetrieb 20 liegenden ersten Arbeitspunkt 26, dessen Drehzahl der unteren Drehzahlgrenze 23 entspricht, zum zweiten Arbeitspunkt 27, dessen Drehzahl größer als die untere Drehzahlgrenze 23 ist und dessen Betrag des Drehmoments größer als der Betrag des Drehmoments des ersten Arbeitspunkts 26 ist. Der zweite Arbeitspunkt 27 liegt jedoch ebenfalls im Grunddrehzahlbetrieb 20 und der erste Rand 27 erstreckt sich bis in den Volllastbetrieb 30a.

Der zweite Rand 28 des ersten Arbeitsbereichs 22 erstreckt sich vom ersten Arbeitspunkt 29, dessen Drehzahl der oberen Drehzahlgrenze 24 entspricht, zu einem zweiten Arbeitspunkt 32, der jedoch im Grunddrehzahlbetrieb 20 und Volllastbetrieb 30a liegt und eine höhere Drehzahl als der zweite Arbeitspunkt 27 des ersten Rands 25 aufweist.

Fig. 8 zeigt ferner einen zweiten Arbeitsbereich 33 des Kennfelds, der überschneidungsfrei mit dem ersten Arbeitsbereich 22 definiert ist und Arbeitspunkte umfasst, deren Betrag des Drehmoments bei einer jeweiligen Drehzahl größer als der größte im ersten Arbeitsbereich 22 liegende Betrag des Drehmoments bei dieser Drehzahl ist. Der zweite Arbeitsbereich 33 schließt unmittelbar an den ersten Arbeitsbereich 22 an. Ein Rand 34 des zweiten Arbeitsbereichs 33 erstreckt sich von einer oberen Drehzahlgrenze 35, die im Leistungsbegrenzungsbetrieb 21 oder Feldschwächbetrieb liegt, bis zum Volllastbetrieb 30a im Grunddrehzahlbetrieb 20. Die Steuereinrichtung 8 ist dazu eingerichtet, die Trägerfrequenz im zweiten Arbeitsbereich 33 mit fallender Drehzahl und fallendem Drehmoment zu erhöhen.

Im Kennfeld ist außerdem ein dritter Arbeitsbereich 36 definiert, der Arbeitspunkte umfasst, deren Betrag des Drehmoments bei einer jeweiligen Drehzahl größer als der größte in den Arbeitsbereichen 22, 33 liegende Betrag des Drehmoments bei dieser Drehzahl ist. Der dritte Arbeitsbereich 36 liegt jenseits des Rands 34 des zweiten Arbeitsbereichs 33 im Grunddrehzahlbetrieb 20 und im Leistungsbegrenzungsbetrieb 21 oder Feldschwächbetrieb. Die Steuereinrichtung 8 ist dazu eingerichtet, die Trägerfrequenz innerhalb des dritten Arbeitsbereichs 36 mit steigender Drehzahl und fallendem Drehmoment oder alternativ mit steigender Drehzahl unabhängig vom Drehmoment zu erhöhen.

Im Übrigen entspricht dieses Ausführungsbeispiel dem ersten Ausführungsbeispiel, das anhand von Fig. 1 und Fig. 2 erläutert wurde.

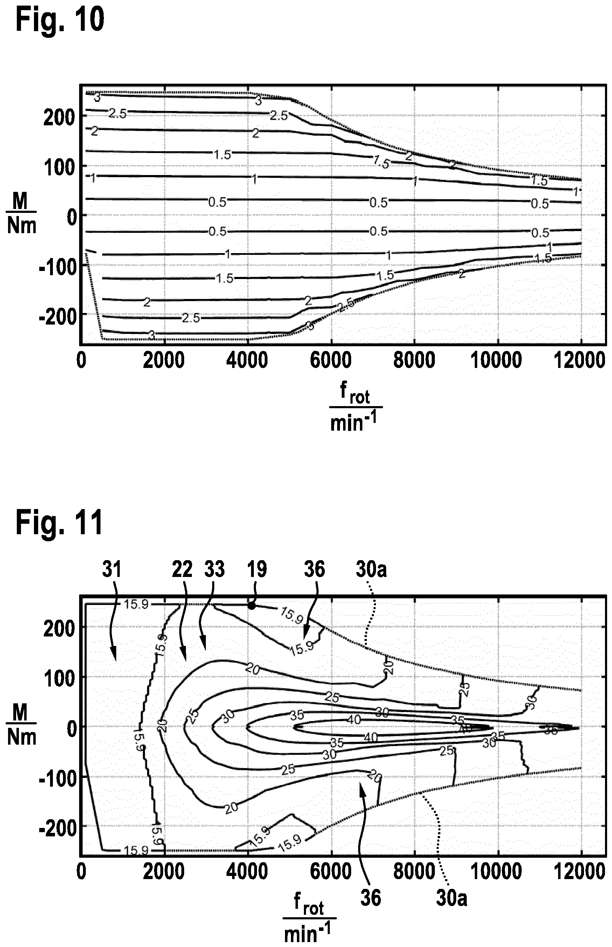

Fig. 9 und Fig. 10 beziehen sich auf eine Fig. 1 entsprechende Anordnung nach dem Stand der Technik. Bei dieser Anordnung ist jedoch vorgesehen, dass die Trägerfrequenz für alle Arbeitspunkte des Drehmoment-Drehzahl-Diagramms konstant mit 15.9 kHz vorgegeben wird und GDPWM verwendet wird.

Fig. 9 ist ein Drehmoment-Drehzahl-Diagramm mit eingezeichneter WTHD bei der Anordnung nach dem Stand der Technik. Die WTHD ist in Fig. 9 durch Isolinien dargestellt, auf denen ein Wert der WTHD in Prozent angegeben ist. Ersichtlich ist die WTHD wegen der unterschiedlichen Modulationsart anders verteilt als bei der Verwendung von SVM gemäß Fig. 3. Näherungsweise kann hier festgestellt werden, dass die WTHD für kleine Drehmomentwerte eher höhere Werte annimmt. Es existiert jedoch ein globales Maximum der WTHD bei einem Drehmoment von 0 Nm im Leistungsbegrenzungsbetrieb bzw. Feldschwächbetrieb.

Fig. 10 ist ein Drehmoment-Drehzahl-Diagramm mit eingezeichneten Gesamtverlusten des Wechselrichters der Anordnung nach dem Stand der Technik. Die Gesamtverluste sind in Fig. 10 durch Isolinien dargestellt, auf denen ein Wert der Gesamtverluste in kW angegeben ist. Die Verteilung der Gesamtverluste entspricht näherungsweise jener bei SVM gemäß Fig. 4.

Fig. 11, Fig. 12 und Fig. 13 beziehen sich auf ein weiteres Ausführungsbeispiel der Anordnung 1, das dem zuvor beschriebenen Ausführungsbeispiel gemäß Fig. 1 und Fig. 8 entspricht. Dabei ist wiederum eine konkrete Ausgestaltung der Anordnung 1 mit einem Kennfeld gezeigt, das sich bis zu einer Drehzahl von 12.000 min$^{-1}$ erstreckt und Drehmomente zwischen ca. -250 und 250 Nm umfasst. Die Bestimmung der Trägerfrequenz ist arbeitspunktabhängig. Die Schaltsignale 15 werden mittels GDPWM ermittelt.

Fig. 11 ist ein Drehmoment-Drehzahl-Diagramm mit eingezeichneten Trägerfrequenzwerten beim Betrieb des weiteren Ausführungsbeispiels. Das Kennfeld wurde hier experimentell oder durch Simulation ermittelt. Gekennzeichnet sind die Arbeitsbereiche 22, 31, 33, 36 und der Eckarbeitspunkt 19.

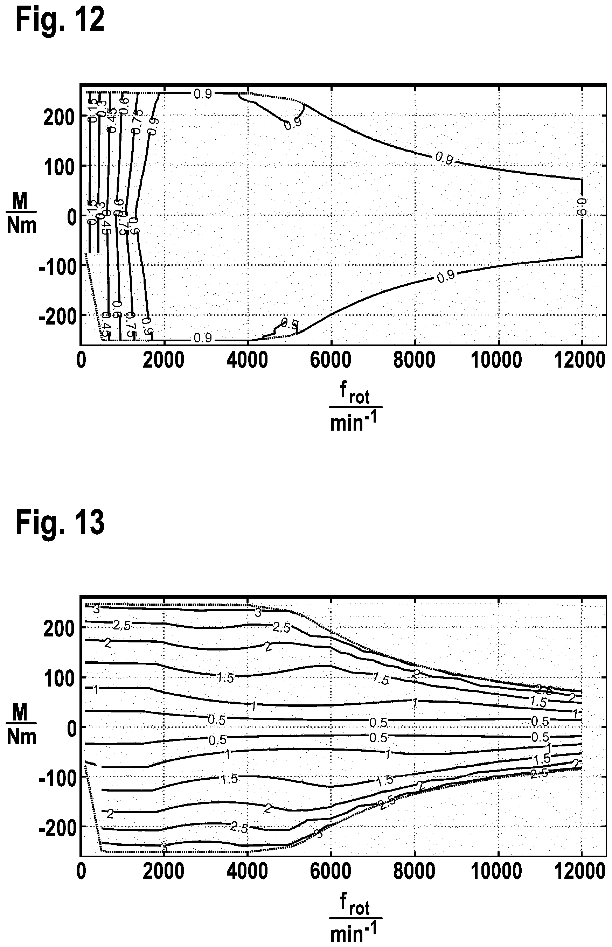

Fig. 12 ist ein Drehmoment-Drehzahl-Diagramm mit eingezeichneter WTHD, wobei die Darstellung Fig. 9 entspricht. Dem Vergleich von Fig. 12 mit Fig. 9 ist zu entnehmen, dass durch arbeitspunktabhängige Bestimmung der Trägerfrequenz ein maximaler WTHD-Wert von 0,9 % realisiert wird, der wesentlich geringer als ein maximaler WTHD-Wert von über 2,5 % bei der konstanten Trägerfrequenzvorgabe nach dem Stand der Technik ist.

Fig. 13 ist ein Drehmoment-Drehzahl-Diagramm mit eingezeichneten Gesamtverlusten des Wechselrichters 2, wobei die Darstellung Fig. 10 entspricht. Aus dem Vergleich von Fig. 13 mit Fig. 10 ist zu entnehmen, dass die anhand von Fig. 4 und 7 erläuterten Vorteile auch bei der Verwendung von GDPWM erzielt werden.

Folgende weitere Ausführungsbeispiele können auf jedem der zuvor beschriebenen Ausführungsbeispiele basieren: Gemäß einem weiteren Ausführungsbeispiel der Steuereinrichtung 8 sind das Kennfeld über diskrete Paare definiert und die Steuereinrichtung 8 dazu eingerichtet, die Trägerfrequenz durch, insbesondere lineare, Interpolation der den diskreten Paaren zugeordneten Trägerfrequenzwerten zu ermitteln. Gemäß einem weiteren Ausführungsbeispiel ist die Steuereinrichtung 8 dazu eingerichtet, die Trägerfrequenz statt anhand des Kennfelds mittels einer analytischen Berechnungsvorschrift, aus welcher die Trägerfrequenz in Abhängigkeit des Arbeitspunkts ermittelbar ist, zu ermitteln. Gemäß einem weiteren Ausführungsbeispiel wird die Drehmomentinformation nicht anhand der Strominformation 16 ermittelt, sondern im Rahmen einer Regelung zur Ermittlung der Schaltsignale 15 durch die Steuereinrichtung 8 geschätzt oder gemessen.

**Patentansprüche**

**1.** Steuereinrichtung (8) für einen eine elektrische Maschine (3) speisenden Wechselrichter (2), wobei die Steuereinrichtung (8) zum Bereitstellen von pulsweitenmodulierten Schaltsignalen (15) mit einer Trägerfrequenz zum Ansteuern von Schaltelementen (12) des Wechselrichters (2) eingerichtet ist, wobei die Steuereinrichtung (8) dazu eingerichtet ist, die Trägerfrequenz in Abhängigkeit einer Arbeitspunktinformation, die einen durch eine Drehzahl und ein Drehmoment der elektrischen Maschine (3) definierten Arbeitspunkt beschreibt, zu ermitteln, **dadurch gekennzeichnet, dass** die Steuereinrichtung (8) dazu eingerichtet ist, die Trägerfrequenz innerhalb eines Arbeitsbereichs (22), der sich innerhalb eines Drehzahlintervalls mit einer von null verschiedenen unteren Drehzahlgrenze (23) und mit einer in einem Leistungsbegrenzungsbetrieb (21) oder Feldschwächbetrieb liegenden oberen Drehzahlgrenze (24) erstreckt, mit steigender Drehzahl und fallendem Betrag des Drehmoment zu erhöhen, wobei sich ein erster Rand (25) des Arbeitsbereichs (22) von einem ersten Arbeitspunkt (26), dessen Drehzahl der unteren Drehzahlgrenze (23) entspricht, zu einem zweiten Arbeitspunkt (27) erstreckt, dessen Drehzahl größer als die untere Drehzahlgrenze (23) ist und dessen Betrag des Drehmoments größer als der Betrag des Drehmoments des ersten Arbeitspunkts (26) ist.

2. Steuereinrichtung nach Anspruch 1, wobei sich ein zweiter Rand (28) des Arbeitsbereichs von einem ersten Arbeitspunkt (29), dessen Drehzahl der oberen Drehzahlgrenze (24) entspricht, zu einem zweiten Arbeitspunkt (27) erstreckt, dessen Drehzahl kleiner als die obere Drehzahlgrenze (29) ist und dessen Betrag des Drehmoments größer als der Betrag des Drehmoments des ersten Arbeitspunkts (29) ist.

3. Steuereinrichtung nach Anspruch 1 oder Anspruch 2, wobei die zweiten Arbeitspunkte (27) des ersten Rands (25) und des zweiten Rands (28)

   - identisch sind und/oder
   - im Leistungsbegrenzungsbetrieb (21) oder Feldschwächbetrieb liegen und/oder
   - von einem maximalen Betrag des Drehmoments bei der Drehzahl des jeweiligen Arbeitspunkts (27) beabstandet sind.

4. Steuereinrichtung nach einem der vorhergehenden Ansprüche, welche dazu eingerichtet ist, die Trägerfrequenz innerhalb eines überschneidungsfrei mit dem ersten Arbeitsbereich (22) definierten zweiten Arbeitsbereichs (30), der Arbeitspunkte umfasst, deren Betrag des Drehmoments bei einer jeweiligen Drehzahl größer als der größte im ersten Arbeitsbereich (22) liegende Betrag des Drehmoments bei dieser Drehzahl ist, mit steigender Drehzahl, insbesondere unabhängig vom Drehmoment, zu erhöhen.

5. Steuereinrichtung nach Anspruch 4, wobei sich der zweite Arbeitsbereich (30) vollständig im Leistungsbegrenzungsbetrieb (21) oder Feldschwächbetrieb befindet und/oder bis zum Volllastbetrieb (30a) erstreckt.

6. Steuereinrichtung nach einem der vorhergehenden Ansprüche, welche dazu eingerichtet ist, die pulsweitenmodulierten Schaltsignale (15) durch kontinuierliche Pulsweitenmodulation, insbesondere Raumzeigermodulation, zu erzeugen.

7. Steuereinrichtung nach Anspruch 1 oder 2, welche dazu eingerichtet ist, die Trägerfrequenz innerhalb eines überschneidungsfrei mit dem ersten Arbeitsbereich (22) definierten zweiten Arbeitsbereichs (33), der Arbeitspunkte umfasst, deren Betrag des Drehmoments bei einer jeweiligen Drehzahl größer als der größte im ersten Arbeitsbereich (22) liegende Betrag des Drehmoments bei dieser Drehzahl ist, mit fallender Drehzahl und fallendem Drehmoment zu erhöhen.

8. Steuereinrichtung nach einem der Ansprüche 1, 2 oder 7, welche dazu eingerichtet ist, die Trägerfrequenz innerhalb eines überschneidungsfrei mit dem ersten Arbeitsbereich (22) definierten dritten Arbeitsbereichs (36), der Arbeitspunkte umfasst, deren Betrag des Drehmoments bei einer jeweiligen Drehzahl größer als der größte im ersten Arbeitsbereich (22) liegende Betrag des Drehmoments bei dieser Drehzahl ist, mit steigender Drehzahl und fallendem Drehmoment oder mit steigender Drehzahl unabhängig vom Drehmoment zu erhöhen.

9. Steuereinrichtung nach Anspruch 7 und 8, wobei der dritte Arbeitsbereich (36) Arbeitspunkte umfasst, deren Betrag des Drehmoments bei einer jeweiligen Drehzahl größer als der größte im zweiten Arbeitsbereich (33) liegende Betrag des Drehmoments bei dieser Drehzahl ist.

10. Steuereinrichtung nach Anspruch 1 oder 2 oder nach einem der Ansprüche 7 bis 9, wobei sich der erste Arbeitsbereich (22) und/oder der zweite Arbeitsbereich (33) und/oder der dritte Arbeitsbereich (36)

- bis in den Volllastbetrieb (30a) erstreckt oder erstrecken und/oder
- vom Grunddrehzahlbetrieb (20) in den Leistungsbegrenzungsbetrieb (21) oder Feldschwächbetrieb erstreckt oder erstrecken.

11. Steuereinrichtung nach Anspruch 1 oder 2 oder nach einem der Ansprüche 7 bis 10, welche dazu eingerichtet ist, die pulsweitenmodulierten Schaltsignale (15) durch diskontinuierliche Pulsweitenmodulation, insbesondere Generalized Discontinous Pulsewidth Modulation, zu erzeugen.

12. Wechselrichter (2), umfassend

- Schaltelemente (12), die dazu verschaltet sind, eine eingangsseitig anliegende Spannung in Abhängigkeit von die Schaltelemente ansteuernden Schaltsignalen in einen Wechselstrom zum Betreiben einer elektrischen Maschine (3) umzurichten, und
- eine Steuereinrichtung (8) nach einem der vorhergehenden Ansprüche.

13. Anordnung (1) mit einem Wechselrichter (2) nach Anspruch 12 und einer elektrischen Maschine (3), die mittels des Wechselrichters (2) betreibbar ist.

14. Anordnung nach Anspruch 13, wobei

die Ermittlung der Trägerfrequenz folgenden Zusammenhang abbildet:

$$f_{PWM}(M, f_{rot}) = \begin{cases} f_{PWM, m_{THD}}(M, f_{rot}) & \text{für } m_{THD}|_{f_{PWM,min}} > \max(m_{THD}|_{f_{PWM,losses}}) \\ f_{PWM,min} & \text{für } m_{THD}|_{f_{PWM,min}} \leq \max(m_{THD}|_{f_{PWM,losses}}) \end{cases}$$

mit

$$f_{PWM, m_{THD}}(M, f_{rot}) = \text{g}(m_{THD}|_{f_{PWM,min}}, \max(m_{THD}|_{f_{PWM,losses}}), f_{PWM,min})$$

und

$$f_{PWM,losses}(M, f_{rot}) = \frac{\max(P_{tot}|_{f_{PWM,min}}) - P_c}{P_S|_{f_{PWM,min}}} \cdot f_{PWM,min}$$

wobei

- $f_{PWM}(M, f_{rot})$ die zu ermittelnde, vom Drehmoment $M$ und der Drehzahl $f_{rot}$ abhängige Trägerfrequenz,
- $m_{THD}$ ein Verzerrungsmaß für harmonische Gesamtverzerrungen von Ausgangsspannungen des Wechselrichters (2),
- $f_{PWM,min}$ eine vorgegebene oder vorgebbare Mindestträgerfrequenz,
- $f_{PWM,losses}(M, f_{rot})$ eine vom Drehmoment M und der Drehzahl $f_{rot}$ abhängige Trägerfrequenz unter Berücksichtigung von dem Maximum der Gesamtverluste des Wechselrichters (2) bei der Mindestträgerfrequenz $\max(P_{tot}|_{fPWM,min})$, Schaltverlusten bei der Mindestträgerfrequenz $P_S|_{fPWM,min}$ und Leitverlusten $P_c$, und
- $f_{PWM,mTHD}(M, f_{rot})$ eine vom Drehmoment M und der Drehzahl $f_{rot}$ abhängige Trägerfrequenz unter Berücksichtigung des Verzerrungsmaßes bei der Mindestträgerfrequenz $m_{THD}|_{fPWM,min}$ und des Maximums des Verzerrungsmaßes bei der von den Verlusten abhängigen Trägerfrequenz $\max(m_{THD}|_{fPWM,losses})$ und
- $\text{g}(m_{THD}|_{fPWM,min}, \max(m_{THD}|_{fPWM,losses}), f_{PWM,min})$ eine, insbesondere simulations- oder messtechnisch ermittelte, Funktion von $m_{THD}|_{fPWM,min}$, $\max(m_{THD}|_{fPWM,losses})$ und $f_{PWM,min}$

beschreiben.

15. Verfahren zum Betreiben eines Wechselrichters (2) zum Versorgen einer elektrischen Maschine (3), umfassend folgende von einer Steuereinrichtung (8) durchgeführte Schritte:

- Ermitteln einer Trägerfrequenz von pulsweitenmodulierten Schaltsignalen (15) zum Ansteuern des Wechselrichters (2) in Abhängigkeit einer Arbeitspunktinformation, die einen durch eine Drehzahl und ein Drehmoment der elektrischen Maschine (3) definierten Arbeitspunkt beschreibt, derart, dass die Trägerfrequenz innerhalb eines Arbeitsbereichs (22), der sich innerhalb eines Drehzahlintervalls mit einer von null verschiedenen unteren Drehzahlgrenze (23) und mit einer in einem Leistungsbegrenzungsbetrieb (21) oder Feldschwächbetrieb liegenden oberen Drehzahlgrenze (24) erstreckt, mit steigender Drehzahl und fallendem Betrag des Drehmoments erhöht wird, wobei sich ein erster Rand (25) des Arbeitsbereichs (22) von einem ersten Arbeitspunkt (26), dessen Drehzahl der unteren Drehzahlgrenze (23) entspricht, zu einem zweiten Arbeitspunkt (27) erstreckt, dessen Drehzahl größer als die untere Drehzahlgrenze (23) ist und dessen Betrag des Drehmoments größer als der Betrag des Drehmoments des ersten Arbeitspunkts (26) ist; und
- Bereitstellen der Schaltsignale (15) für Schaltelemente (12) des Wechselrichters (2).

**16.** Computerprogramm, umfassend Befehle, die bei der Ausführung des Programms durch einen Computer diesen veranlassen, die von der Steuereinrichtung (8) durchgeführten Schritte des Verfahrens nach Anspruch 15 auszuführen.

## Claims

**1.** Control device (8) for an inverter (2) that feeds an electric machine (3), wherein the control device (8) is configured to provide pulse-width modulated switching signals (15) with a carrier frequency to drive switching elements (12) of the inverter (2),
wherein the control device (8) is configured to determine the carrier frequency depending on operating point information that describes an operating point defined by a rotation speed and a torque of the electric machine (3),
**characterized in that** the control device (8) is configured to increase the carrier frequency within an operating region (22) that extends within a rotation speed interval with a lower rotation speed limit (23) differing from zero and with an upper rotation speed limit (24) lying in a power-limiting operating region (21) or field-weakening operating region, as the rotation speed increases and the magnitude of the torque decreases, wherein a first boundary (25) of the operating region (22) extends from a first operating point (26), whose rotation speed corresponds to the lower rotation speed limit (23), to a second operating point (27), whose rotation speed is greater than the lower rotation speed limit (23) and the magnitude of whose torque is greater than the magnitude of the torque of the first operating point (26).

**2.** Control device according to Claim 1, wherein a second boundary (28) of the operating region extends from a first operating point (29), whose rotation speed corresponds to the upper rotation speed limit (24), to a second operating point (27), whose rotation speed is lower than the upper rotation speed limit (29) and the magnitude of whose torque is greater than the magnitude of the torque of the first operating point (29).

**3.** Control device according to Claim 1 or Claim 2, wherein
the second operating points (27) of the first boundary (25) and of the second boundary (28)

- are identical and/or
- lie in the power-limiting operating region (21) or field-weakening operating region and/or
- are spaced apart from a maximum magnitude of the torque at the rotation speed of the respective operating point (27).

**4.** Control device according to one of the preceding claims,
that is configured, as the rotation speed increases, in particular independently of the torque, to increase the carrier frequency within a second operating region (30) that is defined without overlap with the first operating region (22) and that includes operating points, the magnitude of whose torque at a respective rotation speed is greater than the greatest magnitude of the torque in the first operating region (22) at this rotation speed.

**5.** Control device according to Claim 4, wherein
the second operating region (30) is entirely within the power-limiting operating region (21) or field-weakening operating region and/or extends up to the full-load operating region (30a).

**6.** Control device according to one of the preceding claims,
that is configured to generate the pulse-width modulated switching signals (15) through continuous pulse-width modulation, in particular space vector modulation.

**7.** Control device according to Claim 1 or 2,
that is configured, as the rotation speed falls and the torque falls, to increase the carrier frequency within a second operating region (33) that is defined without overlap with the first operating region (22) and that includes operating points, the magnitude of whose torque at a respective rotation speed is greater than the greatest magnitude of the torque in the first operating region (22) at this rotation speed.

**8.** Control device according to one of Claims 1, 2 and 7,
that is configured, as the rotation speed increases and the torque falls or as the rotation speed increases independently of the torque, to increase the carrier frequency within a third operating region (36) that is defined without overlap with the first operating region (22) and that includes operating points, the magnitude of whose torque at a respective rotation speed is greater than the greatest magnitude of the torque in the first operating region (22) at this rotation speed.

**9.** Control device according to Claims 7 and 8, wherein the third operating region (36) includes operating points, the magnitude of whose torque at a respective rotation speed is greater than the greatest magnitude of the torque in the second operating region (33) at this rotation speed.

**10.** Control device according to Claim 1 or 2 or according to one of Claims 7 to 9, wherein
the first operating region (22) and/or the second operating region (33) and/or the third operating region (36)

   - extend or extends into the full-load operating region (30a) and/or
   - extend or extends from the fundamental rotation speed operating region (20) into the power-limiting operating region (21) or field-weakening operating region.

**11.** Control device according to Claim 1 or 2 or according to one of Claims 7 to 10,
that is configured to generate the pulse-width modulated switching signals (15) through discontinuous pulse-width modulation, in particular generalized discontinuous pulse-width modulation.

**12.** Inverter (2), comprising

   - switching elements (12) that are interconnected, depending on switching signals that control the switching elements, to convert a voltage present at the input side into an alternating current for operating an electric machine (3), and
   - a control device (8) according to one of the preceding claims.

**13.** Assembly (1) with an inverter (2) according to Claim 12 and an electric machine (3) that can be driven by means of the inverter (2).

**14.** Assembly according to Claim 13, wherein

the determination of the carrier frequency represents the following relationship:

$$f_{PWM}(M, f_{rot}) = \begin{cases} f_{PWM,m_{THD}}(M, f_{rot}) & \text{for } m_{THD}|_{f_{PWM,min}} > \max(m_{THD}|_{f_{PWM,losses}}) \\ f_{PWM,min} & \text{for } m_{THD}|_{f_{PWM,min}} \leq \max(m_{THD}|_{f_{PWM,losses}}) \end{cases}$$

with

$$f_{PWM,m_{THD}}(M, f_{rot}) = g(m_{THD}|_{f_{PWM,min}}, \max(m_{THD}|_{f_{PWM,losses}}), f_{PWM,min})$$

and

$$f_{PWM,losses}(M, f_{rot}) = \frac{\max(P_{tot}|_{f_{PWM,min}}) - P_c}{P_S|_{f_{PWM,min}}} \cdot f_{PWM,min}$$

wherein

- $f_{PWM}(M,f_{rot})$ describes the carrier frequency that is to be determined and that depends on the torque M and the rotation speed $f_{rot}$,
- $m_{THD}$ describes a distortion measure for the total harmonic distortion of output voltages of the inverter (2),
- $f_{PWM,min}$ describes a predefined or predefinable minimum carrier frequency,
- $f_{PWM,losses}(M, f_{rot})$ describes a carrier frequency that depends on the torque M and the rotation speed $f_{rot}$, taking the maximum of the total losses of the inverter (2) at the minimum carrier frequency $\max(P_{tot}|_{fPWM,min})$, switching losses at the minimum carrier frequency $P_S|_{fPWM,min}$ and conductive losses $P_c$ into consideration, and
- $f_{PWM,mTHD}(M,f_{rot})$ describes a carrier frequency that depends on the torque M and the rotation speed $f_{rot}$, taking the distortion measure at the minimum carrier frequency $m_{THD}|_{fPWM,min}$ and the maximum of the distortion measure at the carrier frequency $\max(m_{THD}|_{fPWM,losses})$ that depends on the losses into consideration, and
- $g(m_{THD}|_{fPWM,min}, \max(m_{THD}|_{fPWM,losses}), f_{PWM,min})$ describes a function, in particular determined through simulation or measurement, of $m_{THD}|_{fPWM,min}$, $\max(m_{THD}|_{fPWM,losses})$ and $f_{PWM,min}$ .

15. Method for operating an inverter (2) for supplying power to an electric machine (3), comprising the following steps carried out by a control device (8):

- determining a carrier frequency of pulse-width modulated switching signals (15) to drive the inverter (2) depending on operating point information that describes an operating point defined by a rotation speed and a torque of the electric machine (3), in such a way that, as the rotation speed increases and the magnitude of the torque falls, the carrier frequency is increased within an operating region (22) that extends within a rotation speed interval with a lower rotation speed limit (23) differing from zero and with an upper rotation speed limit (24) lying in a power-limiting operating region (21) or field-weakening operating region, wherein a first boundary (25) of the operating region (22) extends from a first operating point (26), whose rotation speed corresponds to the lower rotation speed limit (23), to a second operating point (27), whose rotation speed is greater than the lower rotation speed limit (23) and the magnitude of whose torque is greater than the magnitude of the torque of the first operating point (26); and
- providing the switching signals (15) for switching elements (12) of the inverter (2).

16. Computer program, comprising commands which, when the program is executed by a computer, causes the latter to execute the steps, carried out by the control device (8), of the method according to Claim 15.

**Revendications**

1. Dispositif de commande (8) d'un onduleur (2) alimentant une machine électrique (3), le dispositif de commande (8) étant conçu pour fournir des signaux de commutation modulés en largeur d'impulsion (15), ayant une fréquence porteuse, destinés à commander des éléments de commutation (12) de l'onduleur (2),

le dispositif de commande (8) étant conçu pour déterminer la fréquence porteuse en fonction d'une information de point de fonctionnement décrivant un point de fonctionnement défini par une vitesse de rotation et un couple de la machine électrique (3),
**caractérisé en ce que** le dispositif de commande (8) est configuré pour augmenter la fréquence porteuse à l'intérieur d'une plage de travail (22), s'étendant dans un intervalle de vitesse de rotation ayant une limite de vitesse de rotation inférieure (23) différente de zéro et une limite de vitesse de rotation supérieure (24) se situant dans un mode de limitation de puissance (21) ou un mode d'affaiblissement de champ, à mesure que la vitesse de rotation augmente et que la valeur de couple diminue,
**en ce qu'**un premier bord (25) de la plage de travail (22) s'étendant d'un premier point de fonctionnement (26), dont la vitesse de rotation correspond à la limite de vitesse de rotation inférieure (23), à un deuxième point de fonctionnement (27), dont la vitesse de rotation est supérieure à la limite de vitesse de rotation inférieure (23) et dont la valeur du couple est supérieure à la valeur du couple du premier point de fonctionnement (26).

2. Dispositif de commande selon la revendication 1, dans lequel un deuxième bord (28) de la plage de travail s'étend d'un premier point de fonctionnement (29), dont la vitesse de rotation correspond à la limite de vitesse de rotation supérieure (24), à un deuxième point de fonctionnement (27), dont la vitesse de rotation est inférieure à la limite de vitesse de rotation supérieure (29) et dont la valeur du couple est supérieure à la valeur du couple du premier point de fonctionnement (29).

3. Dispositif de commande selon la revendication 1 ou la revendication 2, dans lequel les deuxièmes points de fonctionnement (27) du premier bord (25) et du deuxième bord (28)

   - sont identiques et/ou
   - se situent dans le mode de limitation de puissance (21) ou dans le mode d'affaiblissement de champ et/ou
   - sont espacés d'une valeur maximale du couple à la vitesse de rotation du point de fonctionnement (27) respectif.

4. Dispositif de commande selon l'une des revendications précédentes, qui est conçu pour augmenter la fréquence porteuse à l'intérieur d'une deuxième plage de travail (30) définie sans chevauchement avec la première plage de travail (22), qui comprend des points de fonctionnement dont la valeur du couple pour une vitesse de rotation respective est supérieure à la plus grande valeur du couple se situant dans la première plage de travail (22) à ladite vitesse de rotation, avec une vitesse de rotation croissante, notamment indépendamment du couple.

5. Dispositif de commande selon la revendication 4, dans lequel la deuxième plage de travail (30) se situe entièrement dans le mode de limitation de puissance (21) ou dans le mode d'affaiblissement de champ et/ou s'étend jusqu'au mode de pleine charge (30a).

6. Dispositif de commande selon l'une des revendications précédentes, qui est conçu pour générer les signaux de commutation modulés en largeur d'impulsion (15) par modulation de largeur d'impulsion continue, notamment par modulation de vecteur spatial.

7. Dispositif de commande selon la revendication 1 ou 2, qui est conçu pour augmenter la fréquence porteuse à l'intérieur d'une deuxième plage de travail (33) définie sans chevauchement avec la première plage de travail (22), qui comprend des points de fonctionnement dont la valeur du couple à une vitesse de rotation respective est supérieure à la plus grande valeur du couple à ladite vitesse de rotation se situant dans la première plage de travail (22), avec une vitesse de rotation décroissante et un couple décroissant.

8. Dispositif commande selon l'une des revendications 1, 2 ou 7, qui est conçu pour augmenter la fréquence porteuse à l'intérieur d'une troisième plage de travail (36) définie sans chevauchement avec la première plage de travail (22), qui comprend des points de fonctionnement dont la valeur du couple à une vitesse de rotation respective est supérieure à la plus grande valeur du couple à ladite vitesse de rotation se situant dans la première plage de travail (22), avec une vitesse de rotation croissante et un couple décroissant ou avec une vitesse de rotation croissante indépendamment du couple.

9. Dispositif de commande selon la revendication 7 ou 8, dans lequel la troisième plage de travail (36) comprend des points de fonctionnement dont la valeur du couple à une vitesse de rotation respective est supérieure à la plus grande valeur du couple à ladite vitesse de rotation se situant dans la deuxième plage de travail (33).

10. Dispositif de commande selon la revendication 1 ou 2 ou selon l'une des revendications 7 à 9, dans lequel la première plage de travail (22) et/ou la deuxième plage de travail (33) et/ou la troisième plage de travail (36)

    - s'étend ou s'étendent jusqu'au mode de pleine charge (30a) et/ou
    - s'étend ou s'étendent du mode à vitesse de rotation de base (20) au mode de limitation de puissance (21) ou au mode d'affaiblissement de champ.

11. Dispositif de commande selon la revendication 1 ou 2 ou selon l'une des revendications 7 à 10, qui est conçu pour générer les signaux de commutation modulés en largeur d'impulsion (15) par modulation de largeur d'impulsion discontinue, notamment par modulation de type Generalized Discontinous Pulsewidth Modulation.

12. Onduleur (2), comprenant

    - des éléments de commutation (12) qui sont connectés de manière à convertir une tension appliquée côté entrée en un courant alternatif en fonction de signaux de commutation commandant les éléments de commutation, afin de faire fonctionner une machine électrique (3), et
- un dispositif de commande (8) selon l'une des revendications précédentes.

13. Ensemble (1) comportant un onduleur (2) selon la revendication 12 et une machine électrique (3) pouvant être mise en fonctionnement au moyen de l'onduleur (2).

14. Ensemble selon la revendication 13, dans lequel

la détermination de la fréquence porteuse reproduit la relation suivante :

$$f_{PWM}(M, f_{rot})$$
$$= \begin{cases} f_{PWM,m_{THD}}(M, f_{rot}) \text{ pour } m_{THD}|_{f_{PWM,min}} > \max(m_{THD}|_{f_{PWM,losses}}) \\ f_{PWM,min} \qquad\qquad \text{ pour } m_{THD}|_{f_{PWM,min}} \leq \max(m_{THD}|_{f_{PWM,losses}}) \end{cases}$$

avec

$$f_{PWM,m_{THD}}(M, f_{rot}) = g\big(m_{THD}|_{f_{PWM,min}}, \max(m_{THD}|_{f_{PWM,losses}}), f_{PWM,min}\big)$$

et

$$f_{PWM,losses}(M, f_{rot}) = \frac{\max\big(P_{tot}|_{f_{PWM,min}}\big) - P_c}{P_S|_{f_{PWM.min}}} \cdot f_{PWM,min}$$

où

- $f_{PWM}(M, f_{rot})$ est la fréquence porteuse à déterminer, dépendant du couple M et de la vitesse de rotation $f_{rot}$,
- $m_{THD}$ est un taux de distorsion pour les distorsions harmoniques totales des tensions de sortie de l'onduleur (2),
- $f_{PWM,min}$ est une fréquence porteuse minimale prédéfinie ou pouvant être prédéfinie,
- $f_{PWM,losses}(M, f_{rot})$ est une fréquence porteuse dépendant du couple M et de la vitesse de rotation $f_{rot}$ en tenant compte du maximum des pertes totales de l'onduleur (2) à la fréquence porteuse minimale $\max(P_{tot}|_{fPWM,min})$, les pertes de commutation à la fréquence porteuse minimale $P_S|_{fPWM,min}$ et les pertes de conduction $P_c$, et
- $f_{PWM,mTHD}(M, f_{rot})$ est une fréquence porteuse dépendant du couple M et de la vitesse de rotation $f_{rot}$ en tenant compte du taux de distorsion à la fréquence porteuse minimale et $m_{THD}|_{fPWM,min}$ et du maximum du taux de distorsion à la fréquence porteuse $\max(M_{THD}|_{fPWM,losses})$ dépendant des pertes et
- $g(m_{THD}|_{fPWM,min}, \max(m_{THD}|_{fPWM,losses}), f_{PWM,min})$ est une fonction, déterminée notamment par simulation ou par mesure, de $m_{THD}|_{fPW,min}$, $\max(m_{THD}|_{fPWM,losses})$ et $_{fPWM,min}$.

15. Procédé de fonctionnement d'un onduleur (2) destiné à alimenter une machine électrique (3), comprenant les étapes suivantes, exécutées par un dispositif de commande (8) :

- détermination d'une fréquence porteuse de signaux de commutation modulés en largeur d'impulsion (15) destinés à commander l'onduleur (2) en fonction d'une information de point de fonctionnement décrivant un point de fonctionnement défini par une vitesse de rotation et un couple de la machine électrique (3), de telle sorte que la fréquence porteuse soit amenée à augmenter à l'intérieur d'une plage de travail (22), s'étendant à l'intérieur d'un intervalle de vitesse de rotation ayant une limite de vitesse de rotation inférieure (23) différente de zéro et ayant une limite de vitesse de rotation supérieure (24) se situant dans un mode de limitation de puissance (21) ou un mode d'affaiblissement de champ, avec une vitesse de rotation croissante et une valeur de couple décroissante, un premier bord (25) de la plage de travail (22) s'étendant d'un premier point de fonctionnement (26), dont la vitesse de rotation correspond à la limite de vitesse de rotation inférieure (23), à un deuxième point de fonctionnement (27), dont la vitesse de rotation est supérieure à la limite de vitesse de rotation inférieure (23) et dont la valeur du couple est supérieure à la valeur du couple du premier point de fonctionnement (26) ; et
- fourniture des signaux de commutation (15) destinés à des éléments de commutation (12) de l'onduleur (2).

**16.** Programme informatique comprenant des instructions qui, lors de l'exécution du programme par un ordinateur, amènent ce dernier à mettre en œuvre les étapes du procédé selon la revendication 15, exécutées par le dispositif de commande (8).

# Fig. 1

# Fig. 2

# Fig. 3

## Fig. 4

## Fig. 5

## Fig. 6

## Fig. 7

## Fig. 8

## Fig. 9

## Fig. 10

## Fig. 11

## Fig. 12

## Fig. 13

# EP 4 005 086 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017203668 A1